# DEMANDE DE BREVET EUROPEEN

(11) **EP 2 568 416 A1**
(43) Date de publication de la demande: **13.03.2013**
(21) Numéro de dépôt: 12183599.5
(22) Date de dépôt: 07.09.2012
(51) Int. Cl.: G06K 17/00, G06K 19/073

(54) **Article prépayé à donnée sélectionnable**

(30) Priorité: 07.09.2011 FR 1157951
(71) Demandeur: Cincosenso, 75020 Paris (FR)
(72) Inventeur: Degonde, Stéphane, 75004 PARIS (FR); D'Auzac, Christophe, 75009 PARIS (FR)
(74) Mandataire: Regimbeau

(57) **Abrégé**

La présente invention concerne un article prépayé (1) à donnée sélectionnable telle qu'une valeur, à l'article étant associé un identifiant unique (42), caractérisé en ce qu'il comprend :
- des moyens formant support (2, 3),
- une pluralité de zones d'informations (12) lisibles par machine disposées sur les moyens formant support et respectivement associées à une pluralité de données sélectionnables (13) individuellement, disposées également sur les moyens formant support ; l'identifiant unique étant destiné à être associé à une donnée sélectionnée,
- des moyens de masquage (3) des zones d'informations lisibles par machine, aptes à sélectivement exposer seulement l'une des zones d'informations (12) lisibles par machine en association avec une donnée sélectionnée.

## Description

### DOMAINE DE L'INVENTION

La présente invention concerne les articles prépayés sur support physique, typiquement les chèques ou coffrets cadeaux, ou encore les cartes prépayées.

### ETAT DE L'ART

Les articles prépayés peuvent constituer un droit sur l'obtention d'un bien ou l'accès à un service défini, ou bien conférer une valeur d'échange, monétaire ou non, à utiliser pour acquérir ou bénéficier de biens ou de services.

Il peut être exercé auprès d'un établissement ou d'une enseigne identifiée, ou au sein d'un ensemble d'établissements ou d'enseignes.

Ce droit peut porter sur un bien ou un service donné, ou sur tout ou partie des biens ou services proposés par le/la ou les établissements ou enseignes associées au dispositif prépayé.

La durée de ce droit peut-être ou non limitée dans le temps.

Les articles prépayés trouvent des applications dans un grand nombre de domaines, typiquement les loisirs, la distribution alimentaire ou spécialisée, physique ou dématérialisée, les services à la personne, la téléphonie, les media, les transferts de fonds.

L'acheteur peut acquérir un article prépayé pour son usage personnel ou en vue de l'offrir.

Les articles prépayés peuvent être distingués en deux catégories selon le degré de liberté qu'ils confèrent à l'acheteur :
a) le(s) produit(s) ou service(s) auquel ou auxquels l'article prépayé donne droit, ou le montant ou la valeur qui lui est associé(e), sont prédéfinis. Ils s'imposent donc à l'acheteur. Il s'agit typiquement de cartes prépayées dont le montant est prédéfini (par exemple 10€, 20€, 50€) ;
b) le(s) produit(s) ou service(s) auquel ou auxquels l'article prépayé donne droit, le montant ou la valeur qui lui est associé(e), sont à définir par l'acheteur. L'acheteur conserve la liberté du choix, que celui-ci soit encadré ou non. Il s'agit typiquement de cartes prépayées dont le montant est à définir par l'acheteur, par exemple entre 15€ et 150€.

Ces deux types d'articles ne sont pas sans contraintes pour leur émetteur ou leur distributeur.

A titre d'exemple, pour les articles prépayés ayant un montant prédéfini, les principales contraintes sont notamment d'ordre industriel et financier pour l'émetteur, et de présentation et d'occupation d'espace pour le distributeur. En effet, pour commercialiser une gamme d'articles prépayés de plusieurs montants, l'émetteur doit fabriquer autant d'articles distincts que de montants. Pour une même quantité totale d'articles, l'augmentation du nombre de références induit une réduction de la série moyenne par référence, et par voie de conséquence une augmentation du prix unitaire des articles.

Pour le distributeur, la commercialisation de plusieurs articles prépayés de montants distincts émis par une même marque, nécessite un espace de présentation directement corrélé au nombre de montants proposés.

S'agissant des solutions qui proposent à l'acheteur de définir la valeur qu'il souhaite attribuer à l'article, les contraintes qu'elles imposent sont tant d'ordre technique que de mise en oeuvre opérationnelle. En effet, elles nécessitent qu'une solution technique permette, au sein du point de vente ou du réseau de magasins distributeurs, de réaliser cette attribution de valeur. Elles imposent en outre une saisie par l'opératrice de caisse ou le vendeur, du montant choisi par l'acheteur. C'est à la fois une source de risque (erreur sur le montant saisi) et de perte de productivité (temps passé à communiquer sur le montant choisi puis à le saisir).

### RESUME DE L'INVENTION

La présente invention vise à remédier à ces inconvénients, et propose un article prépayé à donnée sélectionnable telle qu'une valeur, à l'article étant associé un identifiant unique, **caractérisé en ce qu'**il comprend :
- des moyens formant support,
- une pluralité de zones d'informations lisibles par machine disposées sur les moyens formant support et respectivement associées à une pluralité de données sélectionnables individuellement, disposées également sur les moyens formant support ; l'identifiant unique étant destiné à être associé à une donnée sélectionnée,
- des moyens de masquage des zones d'informations lisibles par machine, aptes à sélectivement exposer seulement l'une des zones d'informations lisibles par machine en association avec une donnée sélectionnée.

Ledit article présente une ou plusieurs des caractéristiques facultatives suivantes, prises indépendamment ou en combinaison :
* les moyens formant support comprennent deux éléments mobiles l'un par rapport à l'autre, et les moyens de masquage comprennent une fenêtre prévue dans l'un des éléments et apte à exposer l'une des zones d'informations prévues sur l'autre élément.
* les deux éléments sont mobiles à rotation l'un par rapport à l'autre.
* les deux éléments sont des éléments généralement plans et parallèles assemblées par un pivot.
* les deux éléments sont des corps de révolution coaxiaux, l'un des éléments enveloppant l'autre et tournant autour de lui.
* les moyens formant support possèdent des aménagements permettant la sélection d'une donnée individuelle.
* lesdits aménagements comprennent ladite fenêtre.
* lesdits aménagements comprennent une fenêtre supplémentaire.
* les deux fenêtres sont prévues dans deux parties d'un des éléments, s'ouvrant sur deux faces opposées de l'autre élément.
* les deux fenêtres sont prévues respectivement dans les deux éléments.
* les moyens de masquage comprennent une zone de matériau retirable prévue au droit de chacune des zones d'informations.
* lesdites données sélectionnables sont des valeurs présentées en clair.
* lesdites zones d'informations encodent l'information qu'elles contiennent par une technique choisie dans le groupe comprenant les codes lisibles optiquement, les codes lisibles magnétiquement et les codes lisibles par communication électromagnétique.
* l'article comprend une zone d'informations supplémentaire dans laquelle est encodé l'identifiant unique.
* l'article comprend une carte définie par les moyens formant support et sur laquelle est disposée ladite zone d'informations supplémentaire.

L'invention concerne également un système comprenant :
- un article prépayé tel que défini ci-dessus,
- une unité de traitement, apte, après la lecture d'une information contenue dans une zone d'informations sélectionnée de l'article, à associer la donnée correspondant à la zone d'informations sélectionnée à l'identifiant unique de l'article.

Des aspects préférés mais non limitatifs du système sont les suivants :
* ladite unité de traitement est apte à associer ladite donnée à l'identifiant unique de l'article par lecture de l'information encodée dans la zone d'informations associée à la donnée sélectionnée et lecture de l'identifiant unique, porté par ledit article.
* les deux lectures sont effectuées simultanément par le même moyen de lecture.
* les deux lectures sont effectuées successivement par le même moyen de lecture ou par des moyens de lecture distincts.

### BREVE DESCRIPTION DES FIGURES

D'autres caractéristiques, buts et avantages de l'invention ressortiront de la description qui suit, qui est purement illustrative et non limitative, et qui doit être lue au regard des dessins annexés, sur lesquels :
- les figures 1 et 2 présentent deux vues d'un exemple d'article prépayé selon un aspect de l'invention ;
- les figures 3 et 4 présentent deux vues d'un autre exemple d'article prépayé selon un aspect de l'invention ;
- les figures 5, 6 et 7 présentent un autre mode de réalisation d'article prépayé selon un aspect de l'invention ;
- les figures 8 et 9 présentent deux vues d'une autre variante d'article prépayé selon un aspect de l'invention ;
- la figure 10 présente un exemple de procédé pour la mise en oeuvre de l'invention ;
- les figures 11 et 12 illustrent un exemple de système selon un aspect de l'invention.

### DESCRIPTION DETAILLEE

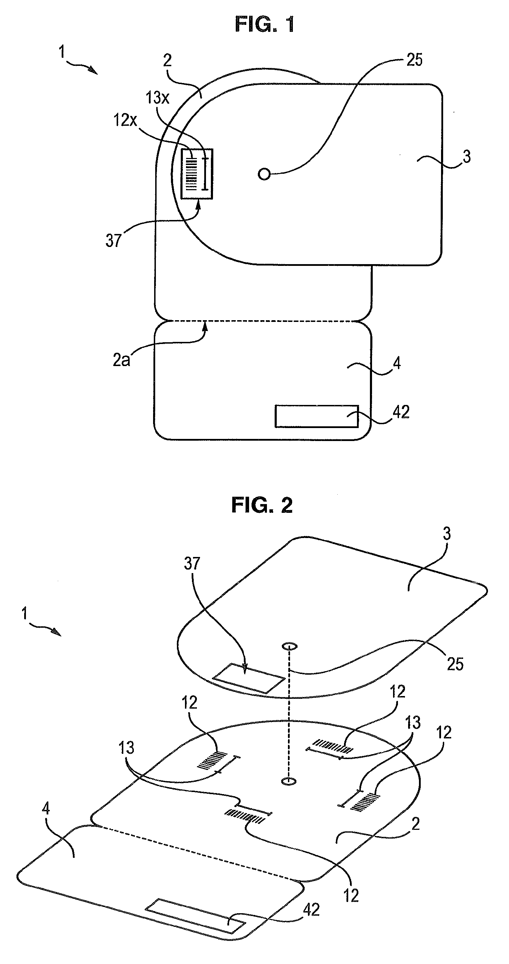

Les figures 1 et 2 présentent deux vues d'un exemple d'article prépayé selon un aspect de l'invention ; la figure 2 présente une vue éclatée de l'article représenté sur la figure 1.

L'article prépayé 1 tel que présenté sur ces figures comprend :
- un premier élément 2 généralement plat,
- un second élément 3 généralement plat monté mobile par rapport au premier élément 2, et
- une carte 4 associée audit premier élément 2, ou en faisant partie, ou encore confondue avec lui.

La carte 4 peut par exemple être reliée de manière sécable au premier élément 2 (on a représenté une prédécoupe 2a ou autre zone fragile par une ligne en pointillés sur les figures 1 et 2), ou grâce à un moyen de liaison tel qu'un adhésif, ou encore être logée dans un emplacement ou conteneur spécifique du premier élément 2. On comprend bien que la carte 4 peut également être reliée de manière similaire au second élément 3, ou en faire partie.

Le premier élément 2 est typiquement composé d'une feuille de carton laminé ou non, ou d'une matière synthétique telle que du PVC (polychlorure de vinyle). Il porte une pluralité de zones d'informations 12 lisibles par machine, à chacune desdites zones étant associée une donnée sélectionnable parmi une pluralité de données 13.

Les données 13 peuvent représenter des valeurs, des droits ou tous autres éléments variables, chacun prédéfini ou non, dont l'utilisateur est susceptible de bénéficier, et peuvent être représentées par des montants, des textes, des dessins, logos ou graphiques, des couleurs, ou toutes combinaisons de telles indications.

Les données 13 peuvent être prédéfinies, ou correspondre à un choix libre ; Dans ce second cas de figure, l'acquisition de l'article prépayé va alors préalablement impliquer, à un certain stade, une saisie de ce choix.

Les informations contenues dans les zones 12 peuvent prendre différentes formes, par exemple un code à une dimension de type code barre, un numéro de série en clair (séquence alphanumérique) lisible par reconnaissance optique, un code en deux dimensions tel qu'un code communément appelé « code QR» ou «QR code» ou encore « Datamatrix », une piste magnétique, une étiquette ou puce électronique de type RFID ou plus généralement toute information lisible par machine, pouvant être lue avec un moyen de lecture sans nécessiter un contact physique.

Dans le mode de réalisation représenté, les données 13 et les zones d'informations associées 12 sont agencées en cercles autour d'un axe 25 constituant le pivot de l'élément 3 par rapport à l'élément 2.

La carte 4 est également typiquement composée d'une feuille de carton laminé ou non, ou de matière synthétique telle que du PVC. Dans le cas où elle est distincte du premier élément 2, elle peut typiquement être réalisée dans le même matériau que celui-ci, notamment dans les modes de réalisations dans laquelle la carte 4 est reliée au premier élément 2 par une région sécable ou découpable.

Dans le mode de réalisation représenté, la carte 4 comprend un identifiant unique 42, par exemple un identifiant en une dimension de type code barre, un identifiant en deux dimensions tels que les codes communément appelés « code QR» ou « QR code », une piste magnétique, un identifiant de type étiquette ou puce RFID ou plus généralement tout identifiant pouvant être lu sans nécessiter un contact physique avec un moyen de lecture.

Dans la forme de réalisation représentée, le second élément 3 est comme on l'a dit monté mobile en rotation autour de l'axe 25 précité le reliant au premier élément 2, cet axe étant par exemple matérialisé par un rivet ou analogue.

Le second élément 3 comprend une fenêtre 37, ayant un dimensionnement et une position adaptés pour que, lors du mouvement du second élément 3 par rapport au premier élément 2, le second élément 3 masque l'ensemble des zones d'informations 12 disposées sur le premier élément 2 et des données 13 associées, à l'exception d'un unique couple composé d'une zone d'informations 12x et de sa donnée 13x correspondante. La fenêtre 37 est formée typiquement par une découpe réalisée dans le second élément 3, ou par une partie du second élément 3 réalisée en matériau transparent.

Lors du déplacement relatif entre les premier et second éléments 2, 3, la fenêtre 37 décrit une trajectoire correspondant au cercle sur lequel sont disposées les zones d'informations 12 et les données 13.

Dans le cas où les informations de la zone 12 sont lisibles de façon magnétique ou électromagnétique, alors le second élément 3 est réalisé en un matériau faisant obstacle à la propagation du champ ou des ondes correspondants.

On comprend bien qu'en fonction des dimensions de l'article prépayé 1, du second élément 3 et du nombre de zones d'informations 12 et de données 13 disposées sur le premier élément 2, le mouvement relatif du second élément 3 par rapport au premier élément 2 peut entrainer que deux zones informations 12 et deux données 13 correspondantes soient partiellement visibles de façon simultanée. Toutefois, le second élément 3, les zones d'informations 12 et les données 13 sont dimensionnés de sorte que l'utilisateur ne peut visualiser entièrement qu'une unique zone d'information 12, et que l'appareil de lecture ne puisse lire des informations que dans l'une des zones d'informations 12.

Par ailleurs, selon les dimensions du premier élément, on pourra prévoir un plus ou moins grand nombre de couples (zone d'informations 12, donnée 13).

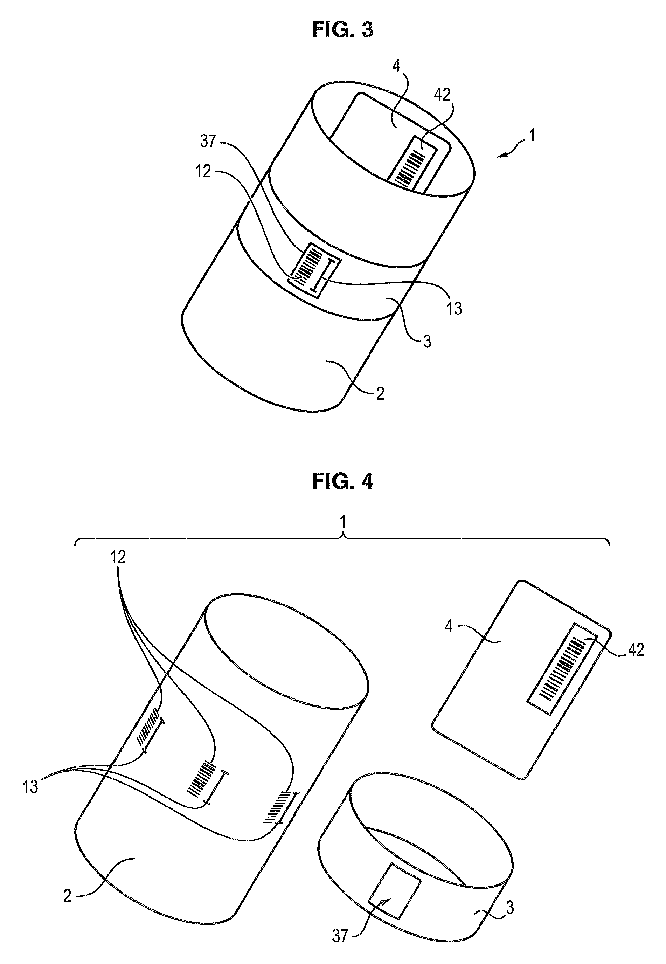

Les figures 3 et 4 présentent deux vues d'une autre forme de réalisation d'un article prépayé selon un aspect de l'invention ; la figure 3 présente les éléments de la figure 4 pris individuellement.

Dans ce mode de réalisation, le premier élément 2 est un corps de révolution creux, qui peut notamment être cylindrique comme illustré, ou encore conique, etc., dans lequel peut être logée la carte 4. En variante, le corps est solidaire d'un conteneur dimensionné pour recevoir la carte, tel qu'un couvercle fermant ledit corps et doté lui même d'un logement.

Les zones d'informations 12 et données 13 correspondantes sont disposées sur la périphérie du conteneur cylindrique. Le second élément 3 est par exemple un bandeau ou manchon, adapté pour pouvoir tourner autour du corps cylindrique formant le premier élément 2.

Dans les modes de réalisation représentés, l'identifiant unique 42 est disposé sur la carte 4. L'identifiant unique 42 peut également être disposé sur le premier élément 2, qui joue alors directement le rôle de carte comme indiqué plus haut.

L'article prépayé 1 comprend typiquement un système d'accrochage, par exemple une découpe réalisée dans la structure même du premier élément 2, du second élément 3 ou de la carte 4 de manière à permettre d'accrocher l'article prépayé 1 à un présentoir de type broche, ou encore un élément en feuille rajouté, fixé par exemple par adhésif, possédant un orifice d'accrochage normalisé.

Dans le cas où le système d'accrochage est une découpe, celle-ci est avantageusement réalisée à une périphérie du premier élément 2 ou du second élément 3, celui-ci étant alors configuré de sorte qu'une partie du second élément 3 déborde de la surface délimitée par le premier élément 2, ou inversement.

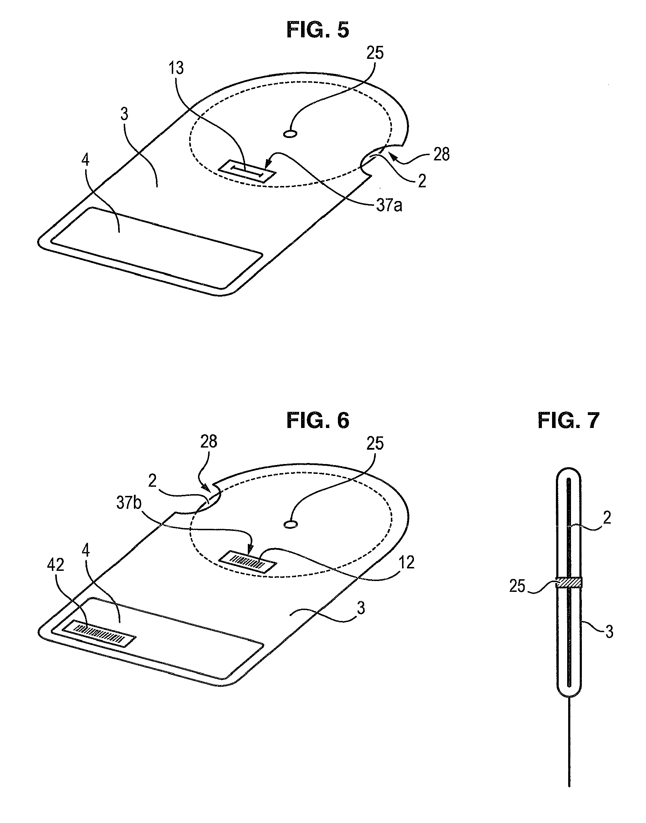

Les figures 5, 6 et 7 présentent trois vues d'un autre mode de réalisation d'un article prépayé selon l'invention. Les figures 5 et 6 présentent respectivement une vue de face et arrière de l'article prépayé 1, tandis que la figure 7 présente une vue en coupe de l'article prépayé 1.

Dans ce mode de réalisation, le premier élément 2 est un disque représenté en pointillés sur les figures 5 et 6, comprenant plusieurs zones d'information 12 sur une de ses faces, et les données correspondantes en des emplacements bien déterminés sur l'autre de ses faces.

Le second élément 3, réalisé par exemple sous la forme de deux feuilles collées l'une à l'autre périphériquement autour du disque, forme alors une enveloppe autour du premier élément 2, qui y est relié par un axe de pivotement 25.

L'élément 2 présente alors deux fenêtres 37a, 37b de formes et de tailles identiques ou différentes, la première sur une face avant du masque 3 et la seconde sur la face opposée, de sorte que deux zones associées respectivement prévues sur chacune des faces du premier élément 2 soient visibles. Ainsi, l'acheteur de l'article prépayé 1 pourra par exemple choisir une donnée sélectionnable 13 en regardant l'article prépayé 1 de face ; par rotation du disque 2 par rapport à l'enveloppe 3 ; cette action expose la zone d'information 12 correspondante, au verso de l'article prépayé 1, permettant ainsi à l'opératrice de caisse de lire la zone d'information 12 correspondant à la donnée 13 choisie par l'acheteur.

Le masque 3 comprend alors avantageusement une découpe 28 permettant à l'utilisateur de manipuler le premier élément 2, par exemple de le faire tourner dans le mode de réalisation illustré.

On observe que la carte 4 prend ici la forme d'une partie prédécoupée du masque 3, ou en variante est insérée dans un logement prédécoupé dans le masque 3.

Ce mode de réalisation particulier permet de présenter une face avant plus attractive, l'utilisateur pouvant sélectionner une donnée 13 sans avoir à visualiser les zones d'informations 12, ces dernières étant toutefois accessibles sur la face arrière de l'article prépayé 1 pour l'affectation ultérieure de la donnée choisie à l'identifiant unique 42 de la carte 4, également situé de préférence sur ladite face arrière.

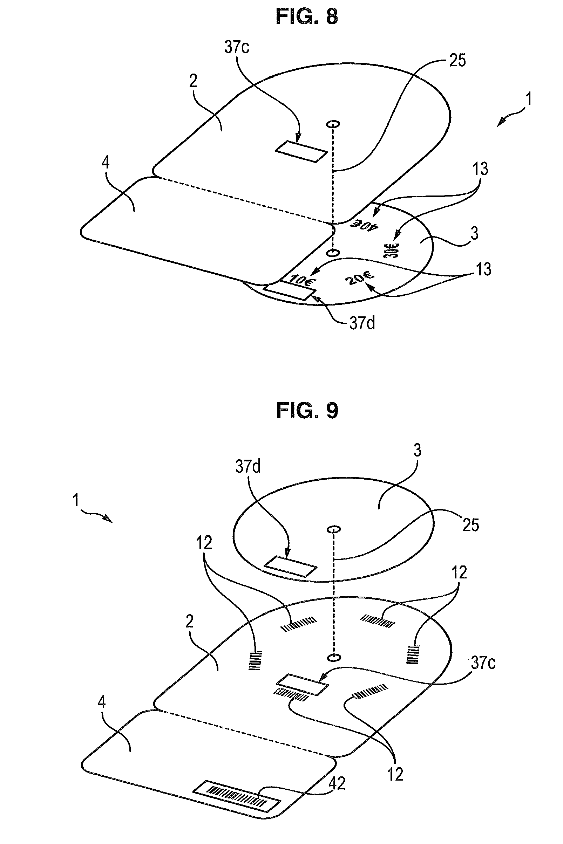

Les figures 8 et 9 présentent deux vues éclatées d'une autre forme de réalisation d'un article prépayé selon un aspect de l'invention : une vue éclatée avant et une vue éclatée arrière.

Tout comme la forme de réalisation présentée sur les figures 1 et 2, cette variante présente un premier élément 2 sur lequel est monté pivotant un second élément 3 au moyen d'un axe 25 tel qu'un rivet.

La carte 4 est ici reliée de manière sécable au premier élément 2.

Dans cette forme de réalisation, le premier élément 2 comprend une pluralité de zones d'informations 12, tandis que le second élément 3 comprend une pluralité de données sélectionnables associées 13.

Chacun des éléments 2 et 3 comprend alors une fenêtre, respectivement 37c et 37d, la première étant adaptée pour permettre à un acheteur de sélectionner une unique donnée 13, et la seconde étant adaptée pour dégager la zone d'information 12 correspondante, lors du mouvement relatif des premier et second éléments 2 et 3.

Ainsi, un acheteur peut sélectionner une donnée 13 par déplacement relatif de l'élément 3 par rapport à l'élément 2, la zone d'information 12 correspondante étant découverte du côté opposé, où par ailleurs se trouve l'identifiant unique 42.

Selon une variante des différents modes de réalisation décrits ci-dessus, on peut prévoir que toutes les données sélectionnables 13 soient visibles simultanément, et que l'une de ces données soit sélectionnée en amenant un curseur ou autre indicateur, prévu sur un élément de l'article qui est mobile par rapport à l'élément portant lesdites données, au droit de la donnée en question. Dans le même, temps la conception des deux éléments est telle que seule la zone d'information 12 associée est exposée.

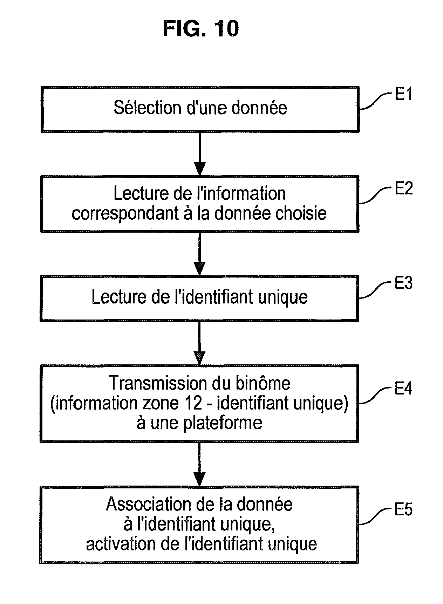

La figure 10 présente un exemple d'un procédé mettant en oeuvre un article prépayé 1 selon l'invention.

Dans une première étape E1, un utilisateur choisit la donnée 13 (typiquement une valeur monétaire) qu'il souhaite affecter à l'article prépayé, typiquement en déplaçant le second élément 3 de sorte que seule la zone d'informations 12 correspondant à une donnée 13 sélectionnée soit visible.

Dans une deuxième étape E2, l'information de la zone 12 ainsi sélectionnée est lue par un moyen adapté tel qu'un lecteur optique, un lecteur RFID, ou tout autre moyen de lecture adapté au type d'encodage choisi. Dans le cas où cette information correspond à une donnée à choix libre, l'acheteur est alors invité à saisir la donnée qu'il souhaite affecter à l'article, ou à l'indiquer à l'opératrice de caisse pour qu'elle la saisisse elle-même.

Dans une troisième étape E3, l'identifiant unique 42 est lu via un moyen adapté tel qu'un lecteur optique, un lecteur monétique, un lecteur RFID, ou renseigné via un extranet, un SVI ou tout autre moyen de lecture ou de saisie adapté au type de code choisi.

Dans une quatrième étape E4, le couple constitué de l'information encodée dans la zone d'information 12 et du code identifiant unique 42 est transmis vers une plateforme gestionnaire des articles prépayés, comprenant par exemple une base de données stockée sur un serveur.

Dans une cinquième étape E5, le code identifiant unique 42 est déclaré actif et il lui est alors associé, sur la plateforme, la donnée 13 initialement choisie.

Selon une autre variante, chacune des informations 12 d'un article 1 comprend également l'identifiant unique 42 de cet article 1. Ainsi, la seule lecture de l'une des informations permet d'attribuer alors au niveau de la plateforme, la donnée associée 13 à l'identifiant unique 42, sans nécessiter l'étape E3 de lecture additionnelle de cet identifiant unique 42.

Une donnée par défaut peut être préalablement attribuée à l'identifiant unique 42 de la carte 4, qui est ensuite remplacée par la donnée choisie par l'utilisateur lors de l'étape E5.

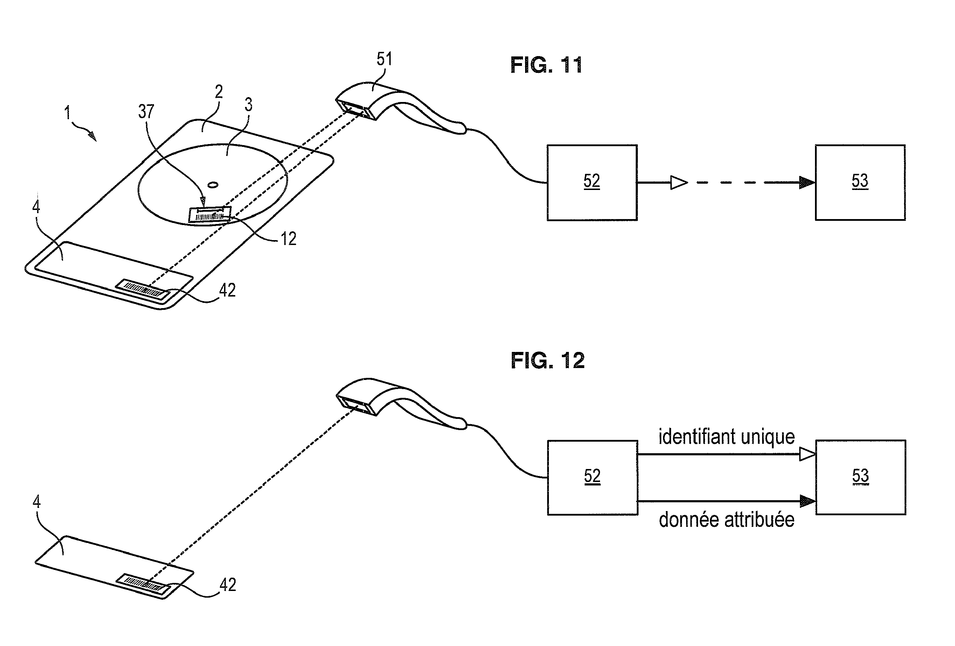

La figure 11 présente un exemple de système mettant en oeuvre une variante de l'article selon l'invention.

Un lecteur 51 lit une information contenue dans la zone d'informations 12 de l'article prépayé 1 qui est visible. Ce lecteur 51 transmet alors typiquement l'information à un terminal 52, par exemple une caisse enregistreuse ou autre terminal de point de vente, qui va ensuite la communiquer à une plateforme distante 53 par un protocole approprié et connu en soi, via un réseau.

On comprend que le lecteur 51 est adapté au type d'information choisi, par exemple un lecteur optique de codes-barres, de codes en deux dimensions, de pistes magnétiques, d'étiquettes RFID, etc...

Dans le cas où l'identifiant unique 42 est déjà inclus dans chacune des zones d'informations 12 de l'article, alors la plateforme peut directement effectuer l'association entre cet identifiant unique 42 et la donnée 13 sélectionnée (qui par exemple est également encodée dans l'information de la zone 12).

Dans le cas contraire, l'identifiant unique 42 est également lu par le lecteur 51 ou par un autre moyen de lecture, et transmis à la plateforme 53 qui l'associe alors à la donnée 13 sélectionnée.

A titre d'exemple, on considère un article prépayé sur lequel sont indiquées les valeurs suivantes : 10, 20, 50 et 100 euros. Une valeur de 0 euros est alors typiquement attribuée à l'identifiant unique 42 de l'article prépayé. En supposant qu'on utilise ici la forme de réalisation des figures 1 et 2, l'utilisateur sélectionne au moyen de l'élément mobile 3 laquelle de ces valeurs il souhaite affecter à l'article prépayé ; par exemple 50 euros. Lors du passage en caisse, l'utilisateur présente l'article prépayé à la caisse, en ayant positionné la donnée 13 choisie et la zone d'information 12 de sorte qu'elles soient visibles dans la fenêtre 37. Un opérateur lit ensuite l'information contenue dans cette zone d'information 12 à l'aide du lecteur 51, et le cas échéant l'identifiant unique 42 se trouvant sur la carte, de sorte que cette zone d'information 12 et l'identifiant unique 42 soient communiqués à la plateforme 53 qui va remplacer la valeur de 0 euros attribuée à l'identifiant unique de la carte par la valeur choisie, soit 50 euros pour cet exemple, déterminée par le contenu informationnel de la zone 12 lue. Cette plateforme 53 comprend typiquement une base de données listant les données 13 et les informations contenues dans les zones d'informations 12 associées, les identifiants uniques des différentes cartes, et la valeur attribuée à chacun de ces identifiants uniques une fois leur activation effectuée, selon le procédé décrit. Ainsi, on peut obtenir la valeur à partir de la lecture de l'identifiant unique.

La figure 12 illustre l'utilisation, par son bénéficiaire, de la carte 4 comprenant l'identifiant unique 42 auquel a préalablement été attribuée une donnée 13.

Lors de l'utilisation, l'identifiant unique 42 est lu par une machine 51 adaptée, telle qu'un lecteur optique, un lecteur monétique, un lecteur RFID, ou renseigné via un extranet, un SVI ou tout autre moyen de lecture ou de saisie adapté au type de code choisi.. Cette machine 51 est typiquement reliée à un terminal 52 qui communique avec la plateforme 53, ou bien communique directement avec la plateforme 53. Les requêtes auprès de la plateforme 53 et le dialogue qui s'opèrent entre le terminal 52 et la plateforme 53, typiquement de consultation de solde, d'autorisation de consommation, sont généralement effectués en flux synchrones.

Le terminal 52 et la plateforme 53 constituent ainsi un ensemble de traitement permettant d'associer une donnée 13 à l'identifiant unique 42 de l'article prépayé 1, puis d'utiliser ledit identifiant unique 42, en fonction des modalités d'utilisation ou de consommation de la donnée 13 qui lui a été associée.

Selon une variante de réalisation non illustrée, la sélection d'une donnée 13 et l'exposition de la zone d'informations 12 correspondante consistent à dégager une couche de matériau, par exemple une étiquette autocollante, un volet articulé, une fenêtre ou trappe amovible prédécoupée dans la matière de l'article, une encre à gratter, ou autre. Cette opération permettant ainsi de rendre lisible la zone d'informations 12 correspondant à la donnée 13 choisie.

Dans ce cas, l'article peut s'affranchir de la présence de deux éléments mobiles l'un par rapport à l'autre.

Dans ce cas, les données sélectionnables sont imprimées sur ou au voisinage immédiat des différents volets ou trappes, ou zones d'encre à gratter, recouvrant les zones d'informations respectives 12.

La présente invention présente plusieurs avantages par rapport aux moyens connus de l'état de la technique.

Elle permet tout d'abord de réaliser un gain de place conséquent sur les rayonnages par rapport à des articles prépayés à valeur fixe. Un seul type d'article prépayé selon l'invention suffit en effet à couvrir une pluralité de données et offrir un choix parmi plusieurs produits ou services ou, typiquement, plusieurs valeurs monétaires.

De plus, l'utilisation est simple et permet d'éviter des risques d'erreurs. Le choix de la donnée et son association avec l'identifiant unique sont en effet réalisés de manière à ce qu'il n'y ait pas de confusion possible avec d'autres données. De plus, la proposition à un utilisateur d'une pluralité de choix définis est plus aisée qu'un choix illimité qui est susceptible de le laisser indécis. La présente invention permet ainsi de guider l'utilisateur en facilitant ses choix.

En outre, l'invention est avantageuse en termes de fabrication, dans la mesure où un unique article peut couvrir une pluralité de données, contrairement aux solutions connues où une pluralité d'articles distincts devaient être produits, chacun des articles visant une valeur, un bien ou service unique.

Enfin, l'invention présente un caractère ludique ; le choix de la donnée par l'utilisateur au moyen de l'article prépayé selon l'invention est en effet interactif et plus satisfaisant pour l'utilisateur que le simple choix d'un article parmi une pluralité.

## Revendications

1. Article prépayé (1) à donnée sélectionnable telle qu'une valeur, à l'article étant associé un identifiant unique (42), **caractérisé en ce qu'**il comprend :
- des moyens formant support (2, 3),
- une pluralité de zones d'informations (12) lisibles par machine disposées sur les moyens formant support et respectivement associées à une pluralité de données sélectionnables (13) individuellement, disposées également sur les moyens formant support ; l'identifiant unique étant destiné à être associé à une donnée sélectionnée,
- des moyens de masquage (3) des zones d'informations lisibles par machine, aptes à sélectivement exposer seulement l'une des zones d'informations (12) lisibles par machine en association avec une donnée sélectionnée.

2. Article prépayé (1) selon la revendication 1, dans lequel les moyens formant support comprennent deux éléments (2, 3) mobiles l'un par rapport à l'autre, et dans lequel les moyens de masquage comprennent une fenêtre (37 ; 37b ; 37d) prévue dans l'un (3) des éléments et apte à exposer l'une des zones d'informations (12) prévues sur l'autre élément (2).

3. Article prépayé (1) selon la revendication 2, dans lequel les deux éléments sont mobiles à rotation l'un par rapport à l'autre.

4. Article prépayé (1) selon la revendication 3, dans lequel les deux éléments sont des éléments généralement plans et parallèles assemblées par un pivot.

5. Article prépayé (1) selon la revendication 3, dans lequel les deux éléments sont des corps de révolution coaxiaux, l'un des éléments enveloppant l'autre et tournant autour de lui.

6. Article prépayé (1) selon l'une des revendications 2 à 5, dans lequel les moyens formant support possèdent des aménagements permettant la sélection d'une donnée individuelle.

7. Article prépayé (1) selon la revendication 6, dans lequel lesdits aménagements comprennent ladite fenêtre (37).

8. Article prépayé (1) selon la revendication 6, dans lequel lesdits aménagements comprennent une fenêtre supplémentaire (37a ; 37c).

9. Article prépayé (1) selon la revendication 8, dans lequel les deux fenêtres (37a, 37b) sont prévues dans deux parties d'un des éléments (3), s'ouvrant sur deux faces opposées de l'autre élément (2).

10. Article prépayé (1) selon la revendication 8, dans lequel les deux fenêtres (37c, 37d) sont prévues respectivement dans les deux éléments (2, 3).

11. Article prépayé (1) selon la revendication 1, dans lequel les moyens de masquage comprennent une zone de matériau retirable prévue au droit de chacune des zones d'informations (12).

12. Système comprenant :
- un article prépayé (1) selon l'une des revendications 1 à 10,
- une unité de traitement, apte, après la lecture d'une information contenue dans une zone d'informations (12) sélectionnée de l'article, à associer la donnée (13) correspondant à la zone d'informations sélectionnée à l'identifiant unique (42) de l'article.

13. Système selon la revendication 12, dans lequel ladite unité de traitement est apte à associer ladite donnée (13) à l'identifiant unique (42) de l'article par lecture de l'information encodée dans la zone d'informations (12) associée à la donnée sélectionnée et lecture de l'identifiant unique (42), porté par ledit article.

14. Système selon la revendication 13, dans lequel les deux lectures sont effectuées simultanément par le même moyen de lecture.

15. Système selon la revendication 13, dans lequel les deux lectures sont effectuées successivement par le même moyen de lecture ou par deux moyens de lecture distincts.
